# DEMANDE DE BREVET EUROPEEN

(11) **EP 1 642 496 A1**
(43) Date de publication de la demande: **05.04.2006**
(21) Numéro de dépôt: 05405552.0
(22) Date de dépôt: 22.09.2005
(51) Int. Cl.: A01K 85/08, A01K 85/00

(54) **Agrégat souple, irrégulier, réversible destiné à former la tête des mouches artificielles de pêche (streamer) qui confère aux dites mouches deux nages différentes**

(30) Priorité: 23.09.2004 CH 155704
(71) Demandeur: Petitjean, Marc, 1700 Fribourg (CH)
(72) Inventeur: Petitjean, Marc, 1700 Fribourg (CH)

(57) **Abrégé**

Agrégat souple, irrégulier, réversible, destiné à former la tête des mouches artificielles de pêche (streamer) ou autres type de leurres qui confère aux dites mouches et leurres plusieurs nages différentes.

## Description

### DOMAINE TECHNIQUE :

Montage de mouches artificielles pour la pêche
A01K97- .. ??

### ETAT de la TECHNIQUE :

Dans le montage de mouches artificielles pour la pêche appelées streamers (imitation de poissons) et autres nymphes nageuses, les monteurs sont confrontés à divers problèmes :
1-La réalisation d'imitations des poissons et autres nymphes nageuses (formes et couleurs) à l'aide de divers matériaux naturels ou/et synthétiques appropriés.
2-Le résultats doit avoir des aptitudes au lancé à l'aide de la canne à pêche. Pour cela l'aérodynamisme (la traînée) est très important ainsi que le poids propre de la mouche.
3-Le résultat doit avoir des aptitudes à la nage pour leurrer le mieux possible des poissons.
A ce jour la grande majorité des streamers utilisés ont une mage très simpliste basé essentiellement sur l'animation provoqué par le lestage en tête du streamer combiné avec la façon de récupérer (rembobiner) la ligne (petites tirettes successives à vitesses et amplitudes variables).

Pour accroître le potentiel attractif ces streamers, nombre de personnes ont essayez de transposer la bavette des poissons nageurs communément appelés wobbler, rapala sur des streamers sans réel succès tant il est difficile d'obtenir des ondulations satisfaisante avec ce procédé.
Les problèmes sont nombreux, fixation d'une bavette dissymétrique, réglage difficile, vrillage du fil, réduction de la garde (espace libre entre la hampe et la pointe de l'hameçon) pour un résultat tout à fait modeste termes d'amplitude et fréquences des ondulations.
La présente invention remédie à tous ces problèmes et confère une nage à ce jour inégalé.

### DESCRIPTION Détaillée de l'invention :

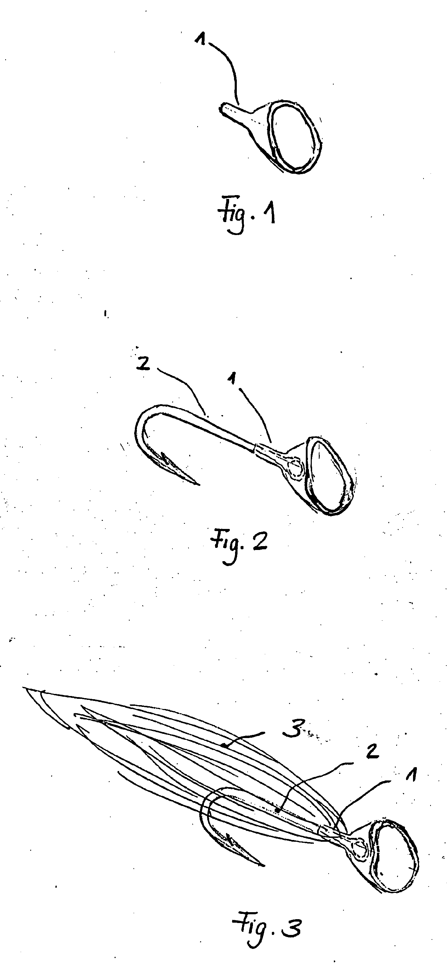

L'agrégat souple se fixe sur la hampe de l'hameçon (2) en partie la plus mince (1) par divers moyen tel que notamment ligature, collage. Fig.1 et Fig.2.

Sur la hampe de l'hameçon (2) sont fixé des matériaux de montage (3) tels que plumes, poils, fibre synthétiques Fig.3.

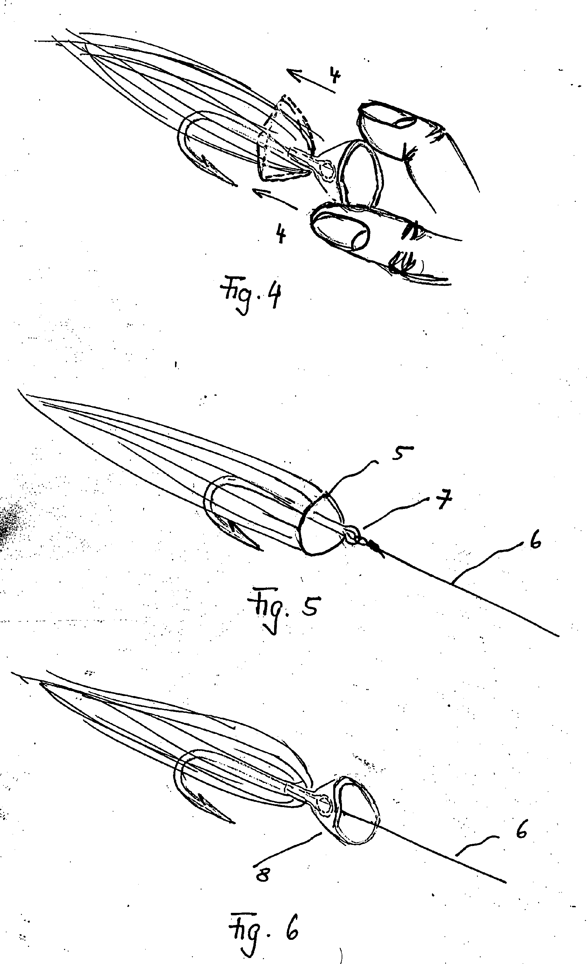

Le montage terminé, on retourne la partie conique de l'entonnoir irrégulier vers l'arrière de l'hameçon en exercent une pression sur l'entonnoir irrégulier d'avant en arrière dans le sens des flèches (4) Fig.4.

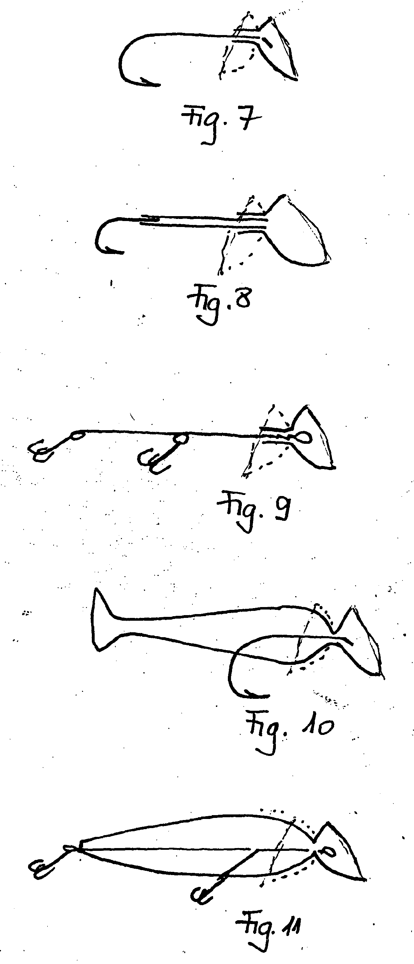

L'entonnoir irrégulier ainsi positionné en arrière (5), le pêcheur peut aisément fixer sa ligne (6) en passant cette dernière directement dans l'oeillet de l'hameçon (7) Fig.5.

Cette position de l'entonnoir irrégulier confère à l'ensemble une nage classique et moyennement attractive.

Lorsque l'on fait l'opération inverse, c'est-à-dire de remettre le cône de l'entonnoir irrégulier dans sa position initial (7) le leurre se comporte totalement différemment, la nage est alors ondulante.Fig.6.

Cette invention présente notamment l'avantage d'avoir 2 types de nages différentes.

## Revendications

1. Agrégat en forme d'entonnoir irrégulier réversible, en matière souple, fixé sur la hampe d'un hameçon, d'une tige destinée à la fabrication de leurres pour la pêche. Fig.7

2. Agrégat en forme d'entonnoir irrégulier réversible selon revendication 1, **caractérisé en ce qu'**il est fixé sur un tube destinée à la fabrication de leurres pour la pêche Fig.8.

3. Agrégat en forme d'entonnoir irrégulier réversible selon revendication 1, **caractérisé en ce qu'**il est fixé sur d'une tige destinée à la fabrication de leurres pour la pêche Fig.9.

4. Agrégat en forme d'entonnoir irrégulier réversible selon revendication 1, **caractérisé en ce qu'**il fait partie intégrante d'un leurre souple pour la pêche Fig.10.

5. Agrégat en forme d'entonnoir irrégulier réversible selon revendication 1, **caractérisé en ce qu'**il fait partie intégrante d'un leurre rigide pour la pêche Fig.11.
